# EUROPÄISCHE PATENTSCHRIFT

(11) **EP 3 727 761 B1**
(45) Veröffentlichungstag und Bekanntmachung des Hinweises auf die Patenterteilung: **19.03.2025**
(21) Anmeldenummer: 18800688.6
(22) Anmeldetag: 20.11.2018
(51) Int. Cl.: B25C 1/18, F16B 15/08

(54) **BEFESTIGUNGSELEMENTESTREIFEN**
FIXING ELEMENT STRIPS
BANDES D'ÉLÉMENTS DE FIXATION

(30) Priorität: 20.12.2017 EP 17209038
(43) Veröffentlichungstag der Anmeldung: 28.10.2020
(73) Patentinhaber: Hilti Aktiengesellschaft, 9494 Schaan (LI)
(72) Erfinder: MIESCHER, Stefan, 9494 Schaan (LI)
(74) Vertreter: Hilti Aktiengesellschaft Corporate Intellectual Property
(86) Internationale Anmeldenummer: PCT/EP2018/081883
(87) Internationale Veröffentlichungsnummer: WO 2019/120827

(56) Entgegenhaltungen:
- EP-A1- 1 705 387
- EP-A1- 2 193 883
- EP-A2- 0 987 086
- EP-A2- 2 520 812
- DE-A1- 19 957 109
- US-A- 5 046 396
- US-A1- 2005 001 007

## Beschreibung

### Technisches Gebiet

Die Anmeldung betrifft einen Befestigungselementestreifen.

### Stand der Technik

Eintreibvorrichtungen weisen üblicherweise einen in einer Befestigungsrichtung verlaufenden Setzkanal für Befestigungselemente und ein Magazin für einen Transport der Befestigungselemente in einer Transportrichtung zu dem Setzkanal auf. Die Befestigungselemente werden üblicherweise in Form von Befestigungselementestreifen zur Verfügung gestellt, wobei ein solcher Befestigungselementestreifen Aufnahmen für die Befestigungselemente umfasst. Die Aufnahmen eines Streifens sind in einer Reihe angeordnet und mittels Verbindungsstegen miteinander verbunden. Die Befestigungselementestreifen werden nacheinander in einen Transportkanal des Magazins eingeführt.

Es sind Magazine und Befestigungselementestreifen bekannt, bei denen die Befestigungsrichtung und die Transportrichtung einen spitzen Winkel einschliessen. Dies bedeutet, dass die Befestigungselemente in der Befestigungsrichtung so zueinander versetzt sind, dass ein in der Transportrichtung vorderstes Befestigungselement auch in der Befestigungsrichtung das vorderste Befestigungselement ist. Wenn mehrere Befestigungselementestreifen hintereinander in dem Transportkanal angeordnet sind, führt dies dazu, dass ein in Transportrichtung nachfolgender Befestigungselementestreifen eine Kraft auf einen in Transportrichtung vorauslaufenden Befestigungselementestreifen ausübt, welche eine Kraftkomponente gegen die Befestigungsrichtung hat. Dies resultiert in einer erhöhten Reibung beim Transport der Befestigungselementestreifen.

Beispiele sind aus der EP 0 987 086 A2 und US 5 046 396 A bekannt.

### Darstellung der Erfindung

Es ist eine Aufgabe der Erfindung, einen Befestigungselementestreifen zur Verfügung zu stellen, welcher leichtgängig in einem Magazin transportierbar ist.

Die Aufgabe ist gelöst bei einem Befestigungselementestreifen mit Aufnahmeelementen und in den Aufnahmeelementen aufgenommenen Befestigungselementen, welche jeweils eine Befestigungsrichtung definieren, welche für alle Befestigungselemente gleich ist, wobei die Aufnahmeelemente in mindestens einer Reihe angeordnet sind, welche eine Transportrichtung, ein vorderstes Aufnahmeelement und ein hinterstes Aufnahmeelement definiert, wobei die Befestigungsrichtung und die Transportrichtung einen spitzen Winkel miteinander einschliessen, wobei der Befestigungselementestreifen ein Stützelement für eine Abstützung des vordersten Aufnahmeelements gegen die Befestigungsrichtung und/oder ein Gegenstützelement für eine Abstützung des hintersten Aufnahmeelements in die Befestigungsrichtung aufweist. Durch die Abstützung des vordersten beziehungsweise hintersten Aufnahmeelements wird eine Kraftkomponente, welche auf das Aufnahmeelement in die Befestigungsrichtung beziehungsweise gegen die Befestigungsrichtung ausgeübt wird, aufgenommen, so dass Reibungskräfte beim Transport des Befestigungselementestreifens in einem Transportkanal eines Magazins reduziert sind.

Eine vorteilhafte Ausführungsform ist dadurch gekennzeichnet, dass das vorderste Aufnahmeelement das Stützelement aufweist und/oder das hinterste Aufnahmeelement das Gegenstützelement aufweist.

Wie in Anspruch 1 dargestellt, die Erfindung ist dadurch gekennzeichnet, dass das Stützelement für eine Abstützung des vordersten Aufnahmeelements an einem Gegenstützelement eines in Transportrichtung vor dem Befestigungselementestreifen angeordneten vorausgehenden Befestigungselementestreifens geeignet ist und das Gegenstützelement für eine Abstützung des hintersten Aufnahmeelements an einem Stützelement eines in Transportrichtung hinter dem Befestigungselementestreifen angeordneten nachfolgenden Befestigungselementestreifens geeignet ist.

Eine vorteilhafte Ausführungsform ist dadurch gekennzeichnet, dass das Stützelement einen Vorsprung umfasst, welcher von dem vordersten Aufnahmeelement in die Transportrichtung abragt und/oder das Gegenstützelement einen Gegenstützvorsprung umfasst, welcher von dem hintersten Aufnahmeelement gegen die Transportrichtung abragt.

Eine vorteilhafte Ausführungsform ist dadurch gekennzeichnet, dass die Aufnahmeelemente jeweils eine Hülse umfassen, in welcher eines der Befestigungselemente aufgenommen ist.

Eine vorteilhafte Ausführungsform ist dadurch gekennzeichnet, dass der Befestigungselementestreifen dafür geeignet ist, in einem Transportkanal eines Magazins einer Eintreibvorrichtung in einer Transportrichtung transportiert zu werden. Die Befestigungselemente sind vorzugsweise als Nägel, Stifte, Bolzen, Schrauben, Dübel, Anker oder ähnliches ausgebildet.

Die Aufgabe ist ebenfalls gelöst bei einer Befestigungsvorrichtung mit einem Magazin, einem ersten Befestigungselementestreifen und einem zweiten Befestigungselementestreifen, wobei das Magazin einen Transportkanal für einen Transport des ersten und des zweiten Befestigungselementestreifens in einer Transportrichtung aufweist, wobei der erste und der zweite Befestigungselementestreifen nach nach einer der vorstehend beschriebenen Ausführungsformen ausgebildet sind. Bevorzugt stehen das Stützelement des in Transportrichtung nachfolgenden Befestigungselementestreifens und das Gegenstützelement des in Transportrichtung vorauslaufenden Befestigungselementestreifens miteinander in Eingriff und stützen sich gegenseitig ab.

### Ausführungsbeispiele

Nachfolgend werden Ausführungsformen einer Vorrichtung zum Eintreiben eines Befestigungselements in einen Untergrund anhand von Beispielen unter Bezugnahme auf die Zeichnungen näher erläutert. Es zeigen:
- Fig. 1: zwei Befestigungselementestreifen in einer teilweisen Seitenansicht,
- Fig. 2: einen Befestigungselementestreifen in einer teilweisen Seitenansicht und
- Fig. 3: zwei Befestigungselementestreifen in einer teilweisen Seitenansicht.

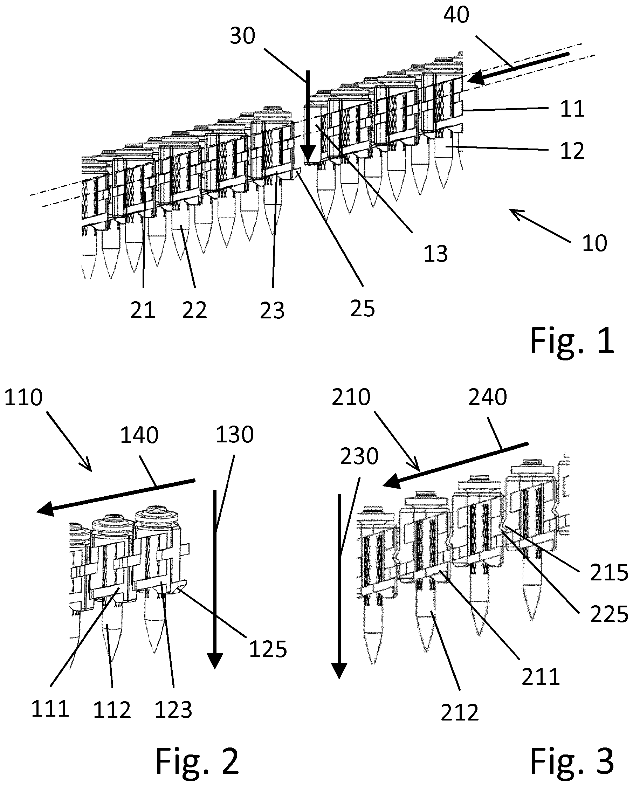

In Fig. 1 sind ein erster Befestigungselementestreifen 10 und ein zweiter Befestigungselementestreifen 20 in einer teilweisen Seitenansicht dargestellt. Der erste Befestigungselementestreifen 10 umfasst eine Vielzahl von als Hülsen ausgebildeten ersten Aufnahmeelementen 11 und in den ersten Aufnahmeelementen 11 aufgenommene erste Befestigungselemente 12, welche jeweils eine Befestigungsrichtung 30 definieren, welche für alle erste Befestigungselemente 12 gleich ist. Die ersten Aufnahmeelemente 11 sind in zwei Reihen entlang einer Transportrichtung 40 angeordnet. Der zweite Befestigungselementestreifen 20 umfasst eine Vielzahl von als Hülsen ausgebildeten zweiten Aufnahmeelementen 21 und in den zweiten Aufnahmeelementen 21 aufgenommene zweite Befestigungselemente 22, welche jeweils in der Befestigungsrichtung 30 orientiert sind. Die zweiten Aufnahmeelemente 21 sind in zwei Reihen entlang der Transportrichtung 40 angeordnet. In der Transportrichtung 40 bilden der erste Befestigungselementestreifen 10 einen nachfolgenden Befestigungselementestreifen und der zweite Befestigungselementestreifen 20 einen vorausgehenden Befestigungselementestreifen.

Die Befestigungsrichtung 30 und die Transportrichtung 40 schliessen einen Winkel von 70° miteinander ein. Ein hinterstes Aufnahmeelement 23 des zweiten Befestigungselementestreifens 20 weist ein Gegenstützelement 25 auf, welches das hinterste Aufnahmeelement 23 an einem vordersten Aufnahmeelement 13 des ersten Befestigungselementestreifens 10 in die Befestigungsrichtung 30 abstützt. Das Gegenstützelement 25 ist dazu als Gegenstützvorsprung ausgebildet, welcher von dem hintersten Aufnahmeelement 23 gegen die Transportrichtung 40 abragt und von unten an dem vordersten Aufnahmeelement 13 des ersten Befestigungselementestreifens 10 anliegt. Der erste und der zweite Befestigungselementestreifen 10, 20 greifen also in Bezug auf die Befestigungsrichtung 30 formschlüssig ineinander ein.

In Fig. 2 ist ein Befestigungselementestreifen 110 in einer teilweisen Seitenansicht dargestellt. Der Befestigungselementestreifen 110 umfasst eine Vielzahl von als Hülsen ausgebildeten Aufnahmeelementen 111 und in den Aufnahmeelementen 111 aufgenommene Befestigungselemente 112, welche jeweils eine Befestigungsrichtung 130 definieren, welche für alle Befestigungselemente 112 gleich ist. Die ersten Aufnahmeelemente 111 sind in einer Reihe entlang einer Transportrichtung 140 angeordnet.

Die Befestigungsrichtung 130 und die Transportrichtung 140 schliessen einen Winkel von 70° miteinander ein. Ein in der Transportrichtung 140 hinterstes Aufnahmeelement 123 des Befestigungselementestreifens 110 weist ein Gegenstützelement 125 auf, welches das hinterste Aufnahmeelement 123 in die Befestigungsrichtung 130 abstützt. Das Gegenstützelement 125 ist dazu als Gegenstützvorsprung ausgebildet, welcher von dem hintersten Aufnahmeelement 123 gegen die Transportrichtung 140 abragt.

In Fig. 3 ist ein Befestigungselementestreifen 210 in einer teilweisen Seitenansicht dargestellt. Der Befestigungselementestreifen 210 umfasst eine Vielzahl von als Hülsen ausgebildeten Aufnahmeelementen 211 und in den Aufnahmeelementen 211 aufgenommene Befestigungselemente 212, welche jeweils eine Befestigungsrichtung 230 definieren, welche für alle Befestigungselemente 212 gleich ist. Die ersten Aufnahmeelemente 211 sind in einer Reihe entlang einer Transportrichtung 240 angeordnet. Die Befestigungsrichtung 230 und die Transportrichtung 240 schliessen einen Winkel von 70° miteinander ein.

Für eine vereinfachte Herstellung weisen alle Aufnahmeelemente 211 die gleiche Kontur auf. Jedes Aufnahmeelement 211 des Befestigungselementestreifens 210 weist ein als Stützvorsprung ausgebildetes Stützelement 215 und ein als Gegenstützvorsprung ausgebildetes Gegenstützelement 225 auf, welche von dem jeweiligen Aufnahmeelement 211 in die Transportrichtung 240 beziehungsweise gegen die Transportrichtung 240 abragen. Das Stützelement eines nicht gezeigten vordersten Aufnahmeelements des Befestigungselementestreifens 210 stützt das vorderste Aufnahmeelement an dem Gegenstützelement eines ebenfalls nicht gezeigten hintersten Aufnahmeelements eines in Transportrichtung 240 vorauslaufenden Befestigungselementestreifens gegen die Befestigungsrichtung ab. Das Gegenstützelement eines nicht gezeigten hintersten Aufnahmeelements des Befestigungselementestreifens 210 stützt das hinterste Aufnahmeelement an dem Stützelement eines ebenfalls nicht gezeigten vordersten Aufnahmeelements eines in Transportrichtung 240 nachfolgenden Befestigungselementestreifens in die Befestigungsrichtung ab.

Die Erfindung wurde anhand einer Reihe von Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass der erfindungsgemässe Befestigungselementestreifen auch für andere Anwendungen einsetzbar ist.

## Patentansprüche

1. Streifen, aufweisend einen vorausgehenden Befestigungselementestreifen (10) und einen nachfolgenden Befestigungselementestreifen (20) jeweils mit Aufnahmeelementen und in den Aufnahmeelementen (11) aufgenommenen Befestigungselementen, welche jeweils eine Befestigungsrichtung (30) definieren, welche für alle Befestigungselemente (12) gleich ist, wobei die Aufnahmeelemente in mindestens einer Reihe angeordnet sind, welche eine Transportrichtung (40), ein vorderstes Aufnahmeelement (13) des nachfolgenden Befestigungselementestreifens und ein hinterstes Aufnahmeelement des vorausgehenden Befestigungselementestreifens definiert, wobei die Befestigungsrichtung (30) und die Transportrichtung (40) einen spitzen Winkel miteinander einschliessen, wobei der nachfolgende Befestigungselementestreifen ein Stützelement für eine Abstützung des vordersten Aufnahmeelements des nachfolgenden Befestigungselementestreifens gegen die Befestigungsrichtung aufweist und der vorausgehende Befestigungselementestreifen ein Gegenstützelement (25) für eine Abstützung des hintersten Aufnahmeelements (23) des vorausgehenden Befestigungselementestreifens in die Befestigungsrichtung aufweist, **dadurch gekennzeichnet, dass** das Stützelement und das Gegenstützelement (25) miteinander in Eingriff stehen und in der Befestigungsrichtung (30) aneinander abgestützt sind.

2. Streifen nach Anspruch 1, wobei das vorderste Aufnahmeelement (13) des nachfolgenden Befestigungselementestreifens das Stützelement aufweist.

3. Streifen nach einem der vorhergehenden Ansprüche, wobei das hinterste Aufnahmeelement (23) des vorausgehenden Befestigungselementestreifens das Gegenstützelement (25) aufweist.

4. Streifen nach einem der vorhergehenden Ansprüche, wobei das Stützelement einen Vorsprung umfasst, welcher von dem vordersten Aufnahmeelement des nachfolgenden Befestigungselementestreifens in die Transportrichtung abragt.

5. Streifen nach einem der vorhergehenden Ansprüche, wobei das Gegenstützelement (125) einen Gegenstützvorsprung umfasst, welcher von dem hintersten Aufnahmeelement (123) des vorausgehenden Befestigungselementestreifens gegen die Transportrichtung (140) abragt

6. Streifen nach einem der vorhergehenden Ansprüche, wobei die Aufnahmeelemente (21) jeweils eine Hülse umfassen, in welcher eines der Befestigungselemente aufgenommen ist.

7. Befestigungsvorrichtung mit einem Magazin und einem Streifen, wobei das Magazin einen Transportkanal für einen Transport des Streifens in einer Transportrichtung aufweist, wobei der Streifen nach einem der vorhergehenden Ansprüche ausgebildet ist.

## Claims

1. Strip, comprising a preceding strip of fastening elements (10) and a succeeding strip of fastening elements (20) each having receiving elements and fastening elements received in the receiving elements (11), said fastening elements each defining a fastening direction (30) that is the same for all fastening elements (12), wherein the receiving elements are arranged in at least one row, which defines a transport direction (40), a frontmost receiving element (13) of the succeeding strip of fastening elements and a rearmost receiving element of the preceding strip of fastening elements, wherein the fastening direction (30) and the transport direction (40) enclose an acute angle, wherein the succeeding strip of fastening elements has a support element for supporting the frontmost receiving element of the succeeding strip of fastening elements counter to the fastening direction and the preceding strip of fastening elements has a counter-support element (25) for supporting the rearmost receiving element (23) of the preceding strip of fastening elements in the fastening direction, **characterized in that** the support element and the counter-support element (25) are in engagement with each other and are supported on each other in the fastening direction (30).

2. Strip according to Claim 1, wherein the frontmost receiving element (13) of the succeeding strip of fastening elements has the support element.

3. Strip according to either of the preceding claims, wherein the rearmost receiving element (23) of the preceding strip of fastening elements has the counter-support element (25).

4. Strip according to one of the preceding claims, wherein the support element comprises a projection, which protrudes in the transport direction from the frontmost receiving element of the succeeding strip of fastening elements.

5. Strip according to one of the preceding claims, wherein the counter-support element (125) comprises a counter-support projection, which protrudes from the rearmost receiving element (123) of the preceding strip of fastening elements counter to the transport direction (140).

6. Strip according to one of the preceding claims, wherein the receiving elements (21) each comprise a sleeve, in which one of the fastening elements is received.

7. Fastening device having a magazine and a strip, wherein the magazine has a transport channel for transport of the strip in a transport direction, wherein the strip is configured according to one of the preceding claims.

## Revendications

1. Bande, comprenant une bande précédente (10) d'éléments de fixation et une bande suivante (20) d'éléments de fixation, chacune avec des éléments de réception et des éléments de fixation reçus dans les éléments de réception (11), qui définissent chacun une direction de fixation (30) qui est la même pour tous les éléments de fixation (12), les éléments de réception étant agencés en au moins une rangée qui définit une direction de transport (40), un élément de réception (13) le plus en avant de la bande suivante d'éléments de fixation et un élément de réception le plus en arrière de la bande précédente d'éléments de fixation, la direction de fixation (30) et la direction de transport (40) formant un angle aigu l'une avec l'autre, la bande suivante d'éléments de fixation présentant un élément d'appui pour un appui de l'élément de réception le plus en avant de la bande suivante d'éléments de fixation contre la direction de fixation, et la bande précédente d'éléments de fixation présentant un contre-élément d'appui (25) pour un appui de l'élément de réception (23) le plus en arrière de la bande précédente d'éléments de fixation dans la direction de fixation, **caractérisé en ce que** l'élément d'appui et l'élément de contre-appui (25) sont en engagement l'un avec l'autre et sont en appui l'un par rapport à l'autre dans la direction de fixation (30).

2. Bande selon la revendication 1, dans laquelle l'élément de réception (13) le plus en avant de la bande suivante d'éléments de fixation présente l'élément d'appui.

3. Bande selon l'une des revendications précédentes, dans laquelle l'élément de réception le plus en arrière (23) de la bande précédente d'éléments de fixation présente l'élément de contre-appui (25).

4. Bande selon l'une des revendications précédentes, dans laquelle l'élément d'appui comprend une saillie qui fait saillie de l'élément de réception le plus en avant de la bande suivante d'éléments de fixation dans la direction de transport.

5. Bande selon l'une des revendications précédentes, dans laquelle l'élément de contre-appui (125) comprend une saillie de contre-appui qui fait saillie de l'élément de réception le plus en arrière (123) de la bande précédente d'éléments de fixation dans le sens opposé au sens de transport (140).

6. Bande selon l'une des revendications précédentes, dans laquelle les éléments de réception (21) comprennent chacun un manchon dans lequel est reçu l'un des éléments de fixation.

7. Dispositif de fixation comprenant un magasin et une bande, le magasin présentant un canal de transport pour un transport de la bande dans une direction de transport, la bande étant réalisée selon l'une des revendications précédentes.
